# EUROPÄISCHE PATENTSCHRIFT

(11) **EP 3 139 011 B1**
(45) Veröffentlichungstag und Bekanntmachung des Hinweises auf die Patenterteilung: **17.10.2018**
(21) Anmeldenummer: 16183324.9
(22) Anmeldetag: 09.08.2016
(51) Int. Cl.: F01N 3/20

(54) **ABGASANLAGE FÜR EINE BRENNKRAFTMASCHINE**
EXHAUST GAS DEVICE FOR A COMBUSTION ENGINE
INSTALLATION DE GAZ D'ÉCHAPPEMENT POUR MOTEUR À COMBUSTION INTERNE

(30) Priorität: 03.09.2015 DE 102015114723
(43) Veröffentlichungstag der Anmeldung: 08.03.2017
(73) Patentinhaber: Eberspächer Exhaust Technology GmbH & Co. KG, 66539 Neunkirchen (DE)
(72) Erfinder: Gaiser, Gerd, 72768 Reutlingen (DE)
(74) Vertreter: Ruttensperger Lachnit Trossin Gomoll

(56) Entgegenhaltungen:
- EP-A1- 1 878 887
- WO-A1-2007/091969
- CN-U- 204 344 210
- DE-A1-102008 008 564
- DE-U1-202008 001 547
- JP-A- S59 158 311
- US-A1- 2010 107 614

## Beschreibung

Die vorliegende Erfindung betrifft eine Abgasanlage für eine Brennkraftmaschine, insbesondere eine Fahrzeugbrennkraftmaschine, gemäß dem Oberbegriff des Anspruchs 1.

Aus der DE 10 2006 059 507 A1 ist eine Abgasanlage bekannt, bei welcher durch eine Reaktionsmittelabgabeanordnung zur Minderung des Schadstoffausstoßes ein Reaktionsmittel in den Abgasstrom eingeleitet wird. Eine sehr effiziente Durchmischung des Reaktionsmittels mit dem Abgas kann bei dieser bekannten Anordnung dadurch erreicht werden, dass das Reaktionsmittel in einer Richtung in den Abgasstrom eingeleitet wird, welche einer Abgasstrom-Hauptströmungsrichtung im Bereich der Reaktionsmitteleinleitung im Wesentlichen entgegengerichtet ist.

Ein Problem bei der Einleitung von Reaktionsmittel, wie z. B. Harnstoff bzw. ein Harnstoff-Wasser-Gemisch, besteht darin, dass durch an einer Wandung des den Abgasstrom führenden Abgaskanals sich niederschlagendes Reaktionsmittel Ablagerungen entstehen können. Derartige Ablagerungen sind insbesondere dann besonders kritisch, wenn sie im Bereich der Reaktionsmittelabgabeanordnung, allgemein auch als Injektor bezeichnet, auftreten, da einerseits die Gefahr besteht, dass nicht mehr die korrekte Menge von Reaktionsmittel abgegeben werden kann, andererseits auch die Ausbreitungsrichtung des abgegebenen Reaktionsmittels beeinträchtigt werden kann. Abhängig auch von der geometrischen Ausgestaltung des Bereichs der Reaktionsmittelabgabe können Rezirkulationszonen entstehen, in welchen aus der Reaktionsmittelabgabeanordnung in Tröpfchen- bzw. Spraykonfiguration abgegebenes Reaktionsmittel rezirkuliert wird und sich sehr nahe am Bereich der Abgabe, also beispielsweise einer Injektorspitze, niederschlagen kann. Besonders groß ist die Gefahr der Rezirkulation dann, wenn, wie aus der DE 10 2006 059 507 A1 bekannt, der Abgasstrom das entgegen seiner Strömungsrichtung eingeleitete Reaktionsmittel in Richtung zum Injektor zurückführt.

Bei einer aus der DE 20 2008 001 547 U1 bekannten Abgasanlage durchströmt ein von einer Reaktionsmittelabgabeeinheit der Reaktionsmittelabgabeanordnung abgegebener Reaktionsmittelstrom nach Abgabe aus der Reaktionsmittelabgabeeinheit ein von einer ringartigen Kammer umgebenes Volumen. In diese Kammer wird Frischluft oder Abgas eingeleitet, so dass in einem Austrittsendbereich dieser Kammer ein den Reaktionsmittelstrom ab diesem Austrittsendbereich umgebender Mantelstrom entsteht.

Eine Abgasanlage gemäß dem Oberbegriff des Anspruchs 1 ist aus der CN 204 344 210 U bekannt. Der auf die Mantelstromabgabekammer folgende Mantelstromabgabekörper ist kegelstumpfartig ausgebildet und ist mit Löchern für den Durchtritt von die Mantelstromabgabekammer durchströmendes Gas versehen.

Es ist die Aufgabe der vorliegenden Erfindung, eine Abgasanlage für eine Brennkraftmaschine, insbesondere Fahrzeugbrennkraftmaschine, vorzusehen, mit welcher der Entstehung von Reaktionsmittelablagerungen entgegengewirkt werden kann.

Erfindungsgemäß wird diese Aufgabe gelöst durch eine Abgasanlage für eine Brennkraftmaschine, insbesondere Fahrzeugbrennkraftmaschine, gemäß Anspruch 1. Diese umfasst einen einen Abgasstrom führenden Abgaskanal und eine Reaktionsmittelabgabeanordnung zur Abgabe eines Reaktionsmittelstroms in den Abgasstrom, gekennzeichnet durch eine Mantelstromerzeugungsanordnung zur Erzeugung eines den aus der Reaktionsmittelabgabeanordnung abgegebenen Reaktionsmittelstrom umgebenden Mantelstroms.

Um in zuverlässiger Weise die den Reaktionsmittelstrom umgebende bzw. umhüllende Konfiguration des Mantelstroms bereitzustellen, ist erfindungsgemäß ferner vorgesehen, dass die Reaktionsmittelabgabeanordnung eine Reaktionsmittelabgabeeinheit umfasst, und dass die Mantelstromerzeugungsanordnung eine die Reaktionsmittelabgabeeinheit ringartig umgebende Mantelstromabgabeeinheit umfasst.

Dabei wird eine über den Umfang gleichmäßige Verteilung des Mantelstroms und eine definierte, gerichtete Abgabe des Mantelstroms dadurch erreicht, dass die Mantelstromabgabeeinheit einen vorzugsweise ringartigen Mantelstromabgabekörper und stromaufwärts des Mantelstromabgabekörpers eine zu dem Mantelstromabgabekörper führende, vorzugsweise ringartige Mantelstromabgabekammer umfasst.

Zum Erhalt einer hinsichtlich der einfachen Herstellbarkeit einerseits und hinsichtlich der definierten Abgabe des Mantelstroms andererseits besonders vorteilhaften Ausgestaltung ist die erfindungsgemäße Abgasanlage dadurch gekennzeichnet, dass der Mantelstromabgabekörper mit poröser Struktur, vorzugsweise als Sinterkörper, ausgebildet ist.

Da bei der erfindungsgemäß aufgebauten Abgasanlage dem Reaktionsmittelstrom ein diesen umgebender bzw. umhüllender Mantelstrom zugeordnet ist, wird die Gefahr, dass Reaktionsmitteltröpfchen sich am Abgaskanal bzw. im Bereich der Reaktionsmittelabgabeanordnung niederschlagen, gemindert. Der Mantelstrom hat eine den Reaktionsmittelstrom abschirmende sowie eine den Reaktionsmittelstrom bei Einleitung in den Abgasstrom führende Wirkung und mindert somit effizient das Risiko der Entstehung von Ablagerungen. Der Reaktionsmittelstrom wird durch den Mantelstrom effizient vor einer Beeinflussung durch Strömungsablösungen des Abgasstroms geschützt. Das Entstehen einer Sekundärströmung im Bereich der Abgabe des Reaktionsmittels wird verhindert, und das Entstehen von aus dem Reaktionsmittelstrom sich herauslösenden Sekundärtröpfchen wird durch den den Reaktionsmittelstrom umgebenden bzw. führenden und abschirmenden Mantelstrom verhindert bzw. zumindest erschwert.

Um eine effiziente Führung bzw. Abschirmung des Reaktionsmittelstroms zu erreichen, wird vorgeschlagen, dass der Mantelstrom den Reaktionsmittelstrom bezüglich einer Reaktionsmittel-Hauptströmungsrichtung wenigstens bereichsweise, vorzugsweise im Wesentlichen vollständig umgibt. Weiter ist es dabei besonders vorteilhaft, wenn eine Mantelstrom-Hauptströmungsrichtung im Wesentlichen einer Reaktionsmittelstrom-Hauptströmungsrichtung entspricht.

Die erfindungsgemäße Abgasanlage weist vorzugsweise eine Mantelstromgasquelle zum Zuführen von Mantelstromgas zu einer Mantelstromabgabeeinheit auf.

Bei einer besonders vorteilhaften Ausgestaltungsvariante wird vorgeschlagen, dass der Mantelstrom im Wesentlichen ein Luftstrom ist, und dass die Mantelstromgasquelle eine Druckluftquelle umfasst. Der Einsatz eines Luftstroms zum Bereitstellen des Mantelstroms bringt verschiedene Vorteile mit sich. Zum einen kann davon ausgegangen werden, dass die zur Erzeugung des Luftstroms eingesetzte Luft eine deutlich niedrigere Temperatur aufweist, als das im Abgaskanal strömende Abgas. Der Luftstrom kann somit genutzt werden, um die Reaktionsmittelabgabeeinheit vor der vergleichsweise hohen Temperatur des Abgasstroms zu schützen bzw. die Reaktionsmittelabgabeeinheit zu kühlen. Es kann somit auf weitere technische Maßnahmen zur Wärmeabfuhr aus dem Bereich der Reaktionsmittelabgabeeinheit verzichtet werden. Des Weiteren kann davon ausgegangen werden, dass der zur Bereitstellung des Mantelstroms genutzte Luftstrom einen geringeren Wasseranteil, also einen geringeren Wasserpartialdruck aufweist, als der Abgasstrom. Dies führt dazu, dass das im Allgemeinen in flüssiger, also in Spray- bzw. in Tröpfchenform eingebrachte Reaktionsmittel durch die Wechselwirkung mit dem den Reaktionsmittelstrom umgebenden Mantelstrom besser verdunstet. Dies mindert einerseits die Gefahr der Entstehung von Ablagerung, führt andererseits zu einer besseren Durchmischbarkeit des Abgasstroms mit dem Reaktionsmittelstrom.

Um den Luftstrom bereitstellen zu können, wird vorgeschlagen, dass die Druckluftquelle umfasst:
- einen Abgasturbolader oder einen mechanischen Lader,
   oder/und
- eine Druckluftbremsanlage,
   oder/und
- eine Druckluftpumpe.

Die Druckluftquelle kann somit also im Wesentlichen Systembereiche umfassen, die in einem Fahrzeug allgemein vorhanden sind, wie z. B. einen Abgasturbolader oder einen auch als Kompressor bezeichneten mechanischen Lader.

Bei einer alternativen Ausgestaltung der erfindungsgemäßen Abgasanlage kann der Mantelstrom im Wesentlichen ein Abgasteilstrom sein. In diesem Falle umfasst die Mantelstromgasquelle eine Abgasquelle. Das Nutzen des im Abgaskanal strömenden Abgases bringt den wesentlichen Vorteil mit sich, dass eine vergleichsweise große Menge an Mantelstromgas zur Verfügung gestellt werden kann, ohne dass dies die Funktionalität bzw. Betriebscharakteristik anderer Systembereiche substantiell beeinflusst. Ferner unterstützt der vergleichsweise warme, als Mantelstrom wirksame Abgasteilstrom aufgrund dessen hoher Temperatur die Verdunstung des Reaktionsmittels, auch wenn der Wasserpartialdruck im Abgasstrom im Allgemeinen höher ist, als in einem Luftstrom.

Die Abgasquelle kann einen von dem Abgaskanal abzweigenden Abgasabzweigungskanal umfassen. Dieser zweigt vorteilhafterweise von dem Abgaskanal stromaufwärts einer Abgasdrosselanordnung ab. Somit wird die Möglichkeit geschaffen, durch entsprechende Einstellung der Abgasdrosselanordnung den Abgasdruck im Bereich der Abgasabzweigung so einzustellen, dass die erforderliche Abgasmenge zur Bereitstellung des Mantelstroms bzw. auch der erforderliche Abgasdruck zur Bereitstellung des Abgasteilstroms generiert werden. Alternativ oder zusätzlich kann zur Einstellung des Abgasdrucks bzw. der Abgasmenge eine Abgasmengeneinstellventilanordnung in Zuordnung zum Abgasabzweigkanal vorgesehen sein. Da es zur Schadstoffminimierung weiter vorteilhaft sein kann, einen Teil des in einer Brennkraftmaschine entstehenden Abgases in dem Verbrennungsprozess zurückzuführen, kann weiter vorgesehen sein, dass der Abgasabzweigkanal eine Abgasrückführleitung umfasst.

Die Abgabe des Reaktionsmittels in den Abgasstrom kann bei der erfindungsgemäßen Abgasanlage derart erfolgen, dass eine Mantelstrom-Hauptströmungsrichtung oder/und eine Reaktionsmittelstrom-Hauptströmungsrichtung des aus der Reaktionsmittelabgabeanordnung abgegebenen Reaktionsmittelstroms im Wesentlichen einer Abgasstrom-Hauptströmungsrichtung des Abgasstroms im Abgaskanal im Bereich der Abgabe des Reaktionsmittelstroms entspricht.

Bei einer alternativen Ausgestaltung kann vorgesehen sein, dass eine Mantelstrom-Hauptströmungsrichtung oder/und eine Reaktionsmittelstrom-Hauptströmungsrichtung des aus der Reaktionsmittelabgabeanordnung abgegebenen Reaktionsmittelstroms im Wesentlichen einer Abgasstrom-Hauptströmungsrichtung des Abgasstroms im Abgaskanal im Bereich der Abgabe des Reaktionsmittelstroms entgegengerichtet ist. Bei dieser im Wesentlichen zueinander entgegengesetzt orientierten Strömungsrichtung des Reaktionsmittelstroms einerseits und des Abgasstrom andererseits wird eine besonders effiziente Durchmischung des Reaktionsmittels mit dem Abgas erreicht. Aufgrund der erfindungsgemäß vorgesehenen Abschirmung des Reaktionsmittelstroms durch den Mantelstrom wird gleichwohl die Gefahr der Entstehung von Ablagerungen durch in Richtung der Reaktionsmittelabgabeanordnung zurückgedrängtes bzw. rezirkuliertes Reaktionsmittel weitestgehend vermieden.

Bei einer weiteren Ausgestaltungsvariante kann vorgesehen sein, dass eine Mantelstrom-Hauptströmungsrichtung oder/und eine Reaktionsmittelstrom-Hauptströmungsrichtung des aus der Reaktionsmittelabgabeanordnung abgegebenen Reaktionsmittelstroms bezüglich einer zu einer Abgasstrom-Hauptströmungsrichtung des Abgasstroms im Abgaskanal im Bereich der Abgabe des Reaktionsmittelstroms im Wesentlichen orthogonalen Strömungsorthogonallinie unter einem Anstellwinkel im Bereich von +45° bis -45°, vorzugsweise im Bereich von +30° bis +5° oder im Bereich von -30° bis -5°, angestellt ist, wobei bei einem positiven Anstellwinkel die Mantelstrom-Hauptströmungsrichtung oder/und die Reaktionsmittelstrom-Hauptströmungsrichtung eine Strömungsrichtungskomponente in Richtung der Abgasstrom-Hauptströmungsrichtung aufweist und bei einem negativen Anstellwinkel die Mantelstrom-Hauptströmungsrichtung oder/und die Reaktionsmittelstrom-Hauptströmungsrichtung eine Strömungsrichtungskomponente entgegen der Abgasstrom-Hauptströmungsrichtung aufweist. bei dieser Anordnung wird der Reaktionsmittelstrom bzw. der Mantelstrom im Wesentlichen quer in den Abgasstrom eingeleitet, wobei eine Anstellung entweder in Richtung oder entgegen der Richtung des Abgasstroms besonders vorteilhaft ist.

Ein Verfahren zum Einleiten von Reaktionsmittel in einen Abgasstrom einer Brennkraftmaschine, insbesondere Fahrzeugbrennkraftmaschine, kann die Maßnahmen umfassen:
a) Abgeben eines Reaktionsmittelstroms in den Abgasstrom,
b) Erzeugen eines den Reaktionsmittelstrom im Bereich der Abgabe des Reaktionsmittelstroms wenigstens bereichsweise, vorzugsweise im Wesentlichen vollständig umgebenden Mantelstroms.

Um dabei eine sehr effiziente Abschirmung des Reaktionsmittelstrom im Bereich der Einleitung des Reaktionsmittels in Abgasstrom bewirken zu können, kann bei der Maßnahme a) der Reaktionsmittelstrom im Wesentlichen in einer Reaktionsmittelstrom-Hauptströmungsrichtung abgegeben werden, und bei der Maßnahme b) kann der Mantelstrom in einer im Wesentlichen der Reaktionsmittelstrom-Hauptströmungsrichtung entsprechenden Mantelstrom-Hauptströmungsrichtung abgegeben werden.

Abhängig von der baulichen Ausgestaltung eines Abgassystems bestehen verschiedene Möglichkeiten, das Reaktionsmittel in den Abgasstrom einzuleiten. Beispielsweise kann eine Mantelstrom-Hauptströmungsrichtung oder/und eine Reaktionsmittelstrom-Hauptströmungsrichtung des Reaktionsmittelstroms im Wesentlichen einer Abgasstrom-Hauptströmungsrichtung des Abgasstroms im Bereich der Abgabe des Reaktionsmittelstroms entsprechen. Alternativ kann eine Mantelstrom-Hauptströmungsrichtung oder/und eine Reaktionsmittelstrom-Hauptströmungsrichtung des Reaktionsmittelstroms im Wesentlichen einer Abgasstrom-Hauptströmungsrichtung des Abgasstroms im Bereich der Abgabe des Reaktionsmittelstroms entgegengerichtet sein. Ferner kann eine Mantelstrom-Hauptströmungsrichtung oder/und eine Reaktionsmittelstrom-Hauptströmungsrichtung des Reaktionsmittelstroms bezüglich einer zu einer Abgasstrom-Hauptströmungsrichtung des Abgasstroms im Bereich der Abgabe des Reaktionsmittelstroms im Wesentlichen orthogonalen Strömungsorthogonallinie unter einem Anstellwinkel im Bereich von +45° bis -45°, vorzugsweise im Bereich von +30° bis +5° oder im Bereich von -30° bis -5°, angestellt sein, wobei bei einem positiven Anstellwinkel die Mantelstrom-Hauptströmungsrichtung oder/und die Reaktionsmittelstrom-Hauptströmungsrichtung eine Strömungsrichtungskomponente in Richtung der Abgasstrom-Hauptströmungsrichtung aufweist und bei einem negativen Anstellwinkel die Mantelstrom-Hauptströmungsrichtung oder/und die Reaktionsmittelstrom-Hauptströmungsrichtung eine Strömungsrichtungskomponente entgegen der Abgasstrom-Hauptströmungsrichtung aufweist.

Zur Erzeugung des Mantelstroms kann Luft verwendet werden mit den vorangehend dargelegten Vorteilen hinsichtlich der Kühlung der zur Abgabe des Reaktionsmittels vorgesehenen Anordnung einerseits und der Unterstützung der Reaktionsmittelverdunstung andererseits. Dabei kann zur Unterstützung der Reaktionsmittelverdunstung vorgesehen sein, dass die Luft vor Erzeugung des Mantelstroms durch den Abgasstrom erwärmt wird. Alternativ kann für den Mantelstrom von dem Abgasstrom abgezweigtes Abgas verwendet werden.

Es ist hier darauf hinzuweisen, dass insbesondere dann, wenn zur Erzeugung des Mantelstroms eine vergleichsweise große Menge an Mantelstromgas erforderlich ist, auch eine Kombination von Luft und Abgas, also ein Luft/Abgas-Gemisch, als Mantelstromgas zur Erzeugung des Mantelstroms genutzt werden kann.

Die vorliegende Erfindung wird nachfolgend mit Bezug auf die beiliegenden Figuren detailliert beschrieben. Es zeigt:
- Fig. 1: ein Abgassystem für eine Brennkraftmaschine eines Fahrzeugs in vereinfachter Darstellung;
- Fig. 2: eine Detailansicht des Abgassystems der Fig. 1 zur Veranschaulichung der Reaktionsmittelabgabe in einen Abgasstrom;
- Fig. 3: eine der Fig. 2 entsprechende Darstellung einer alternativen Art der Reaktionsmittelabgabe;
- Fig. 4: eine der Fig. 2 entsprechende Darstellung einer alternativen Art der Reaktionsmittelabgabe;
- Fig. 5: eine der Fig. 2 entsprechende Darstellung einer alternativen Art der Reaktionsmittelabgabe;
- Fig. 6: eine der Fig. 2 entsprechende Darstellung einer alternativen Art der Reaktionsmittelabgabe;
- Fig. 7: eine der Fig. 1 entsprechende Darstellung einer alternativen Ausgestaltung der Abgasanlage;
- Fig. 8: eine der Fig. 1 entsprechende Darstellung einer alternativen Ausgestaltung der Abgasanlage;
- Fig. 9: eine vereinfachte Detailansicht einer Abgasanlage, bei welcher das zur Erzeugung eines Mantelstroms genutzte Mantelstromgas durch thermische Wechselwirkung mit dem Abgas erwärmt wird;
- Fig.10: eine der Fig. 9 entsprechende Darstellung einer alternativen Ausgestaltungsart;
- Fig. 11: eine weitere der Fig. 9 entsprechende Darstellung einer alternativen Ausgestaltungsart.

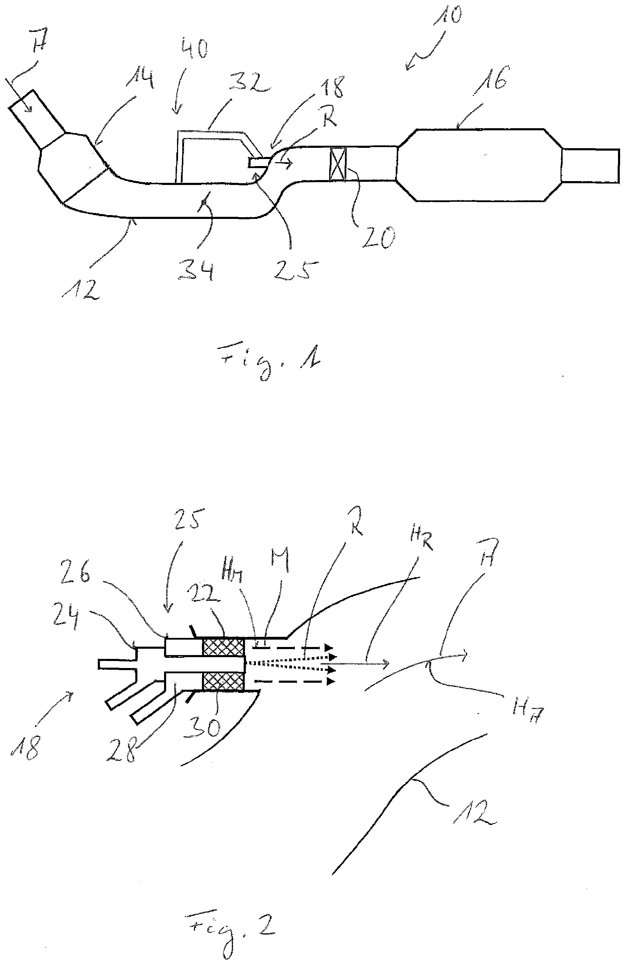

In Fig. 1 ist eine in Verbindung mit einer Brennkraftmaschine eines Fahrzeugs einsetzbare Abgasanlage allgemein mit 10 bezeichnet. Die Abgasanlage umfasst einen beispielsweise mit einer Mehrzahl von Rohrabschnitten und Gehäusebereichen aufgebauten Abgaskanal 12, in welchem das von einer Brennkraftmaschine abgegebene Abgas als Abgasstrom A durch verschiedene Systembereiche strömt. So können beispielsweise in einem stromaufwärtigen Bereich 14 des Abgaskanals 12 ein Oxidationskatalysator und stromabwärts davon ein Partikelfilter angeordnet sein. In einem stromabwärtigen Bereich 16 des Abgaskanals 12 kann eine Katalysatoranordnung für die selektive katalytische Reduktion vorgesehen sein. Stromaufwärts dieser Katalysatoranordnung kann durch eine allgemein mit 18 bezeichnete Reaktionsmittelabgabeanordnung Reaktionsmittel, wie z. B. eine Harnstoff/Wasser-Lösung, als Reaktionsmittelstrom R in den Abgasstrom A eingeleitet werden, um die selektive katalytische Reduktion zu unterstützen. Um dabei eine gute Durchmischung des Reaktionsmittels mit dem Abgas zu erlangen, kann stromabwärts der allgemein auch als Injektor bezeichneten Reaktionsmittelabgabeanordnung 18 eine Mischeranordnung 20 vorgesehen sein.

Es sei darauf hingewiesen, dass die in Fig. 1 nur schematisch dargestellte Abgasanlage 10 hinsichtlich der darin enthaltenen Systembereiche und auch deren Relativpositionierung selbstverständlich in verschiedenster Weise variiert werden kann. So kann alternativ oder zusätzlich in Zuordnung zu einem Partikelfilter oder einem Stickoxid-Speicherkatalysator zur Durchführung einer Regeneration derselben eine Reaktionsmittelabgabeanordnung zur Abgabe von Brennstoff als Reaktionsmittel in den Abgasstrom vorgesehen sein. Die nachfolgend mit Bezug auf die Reaktionsmittelabgabeanordnung 18, welche beispielsweise zur Abgabe einer Harnstoff/Wasser-Lösung als Reaktionsmittel ausgebildet sein kann, beschriebenen konstruktiven und funktionalen Aspekte können gleichermaßen Anwendung finden für eine Reaktionsmittelabgabeanordnung, die zur Abgabe eines anderen Reaktionsmittels, also beispielsweise Brennstoff, in den Abgasstrom vorgesehen ist.

Die Fig. 2 zeigt, dass zur Anbringung der Reaktionsmittelabgabeanordnung 18 am Abgaskanal 12 ein Anbringungsstutzen 22 vorgesehen sein kann, in welchen die Reaktionsmittelabgabeanordnung 18 gasdicht eingesetzt werden kann. Die Reaktionsmittelabgabeanordnung 18 umfasst eine Reaktionsmittelabgabeeinheit 24, welche das im Allgemeinen in flüssiger Form zugeführte Reaktionsmittel empfängt und über eine Einspritzdüse oder dergleichen in Form eines Reaktionsmittelstroms R abgibt. Der Reaktionsmittelstrom R kann als kontinuierlicher oder pulsierender Strom abgegeben werden, wobei das Reaktionsmittel in Spray- bzw. Tröpfchenform aus der Reaktionsmittelabgabeeinheit 24 austritt. Dabei breitet sich das Reaktionsmittel bzw. der Reaktionsmittelstrom R in kegelartiger Form aus, wobei auch bei derartiger kegelartiger Abgabe eine Reaktionsmittelstrom-Hauptströmungsrichtung H_{R} vorliegt, welche beispielsweise als Zentrallinie eines derartigen Ausbreitungskegels angenommen werden kann.

Bei der in Fig. 2 dargestellten Anordnung der Reaktionsmittelabgabeanordnung 18 entspricht die Reaktionsmittelstrom-Hauptströmungsrichtung H_{R} im Bereich des Eintritts des Reaktionsmittelstroms R in den Abgaskanal 12 im Wesentlichen einer Abgasstrom-Hauptströmungsrichtung H_{A}, welche in Fig. 2 durch den den Abgasstrom A repräsentierenden Strömungspfeil wiedergegeben ist. Es sei darauf hingewiesen, dass die Abgasstrom-Hauptströmungsrichtung H_{A} im Wesentlichen repräsentiert sein kann durch eine Längsmittenlinie des Abgaskanals 12, wobei, abhängig von der geometrischen Ausgestaltung, lokale Abweichung bzw. zu lokalen Abweichungen führende Turbulenzen existieren können.

Die Reaktionsmittelabgabeanordnung 18 umfasst ferner eine Mantelstromerzeugungsanordnung 25. Die Mantelstromerzeugungsanordnung 25 ist dazu vorgesehen und ausgebildet, einen den Reaktionsmittelstrom R bezüglich der Hauptströmungsrichtung H_{R} umgebenden Mantelstrom M zu erzeugen. Zu diesem Zwecke umfasst die Mantelstromerzeugungsanordnung 25 eine Mantelstromabgabeeinheit 26 mit einer Mantelstromgas aufnehmenden, ringartigen Mantelstromabgabekammer 28 und stromabwärts davon einem Mantelstromabgabekörper 30. Der Mantelstromabgabekörper 30 kann beispielsweise in einem Gehäuse angeordnet sein, in welchem auch die ringartige Mantelstromabgabekammer 28 ausgebildet ist, und kann, ebenso wie die Mantelstromabgabekammer 28, die Reaktionsmittelabgabeeinheit 24 ringartig umgeben. Der Mantelstromabgabekörper 30 ist mit einer porösen Struktur, beispielsweise als Sinterkörper, aufgebaut, so dass für das in die Mantelstromabgabekammer 28 eingeleitete Mantelstromgas ein definiertes Ausströmverhalten sowohl hinsichtlich der Ausströmmenge, als auch der Ausströmrichtung erzeugt werden kann. Eine poröse Struktur kann auch durch die Ausgestaltung des Mantelstromabgabekörpers 30 als Drahtgestrick, Drahtgewirk oder Drahtgewebe oder als Schaumstruktur oder als engmaschige Wabenstruktur erreicht werden. Auch Kombinationen verschiedener derartiger poröser Körper zum Aufbau des Mantelstromabgabekörpers 30 sind möglich. Grundsätzlich kann der Mantelstromabgabekörper insbesondere in demjenigen Bereich, in welchem das Mantelstromgas aus diesem austritt, zur Beeinflussung der Strömungsrichtung mit rippenartigen Strömungsleitelementen versehen sein.

Der den Reaktionsmittelstrom R vorzugsweise vollständig umgebende bzw. umhüllende Mantelstrom M weist eine Mantelstrom-Hauptströmungsrichtung H_{M} auf, welche im Wesentlichen der Reaktionsmittelstrom-Hauptströmungsrichtung H_{R} entspricht. Da vorzugsweise der Mantelstrom M als laminare Strömung abgegeben wird, besteht zwar im Angrenzungsbereich des Mantelstroms M an den Reaktionsmittelstrom R eine Wechselwirkung zwischen dem Reaktionsmittel und dem Mantelstromgas, eine substantielle Durchmischung wird jedoch nicht auftreten. Beispielsweise kann der Mantelstrom M als im Wesentlichen zylindrische Ringströmung abgegeben werden.

Durch den Mantelstrom M und die mit diesem generierte Ummantelungs- bzw. Umkleidungswirkung für den Reaktionsmittelstrom R wird erreicht, dass das von der Reaktionsmittelabgabeeinheit 24 abgegebene Reaktionsmittel im Wesentlichen nicht in Kontakt mit der Wandung des Abgaskanals 12 bzw. des Stutzens 22 gelangen kann. Die Gefahr, dass ein Niederschlag bzw. eine Ablagerung von Reaktionsmitteltröpfchen insbesondere im Bereich der Abgabe des Reaktionsmittels in den Abgaskanal 12 auftritt, kann somit weitgehend eliminiert werden. Der Mantelstrom M entfaltet aber nicht nur eine derartige Abschirmungswirkung, sondern kann auch eine das Reaktionsmittel bzw. den Reaktionsmittelstrom R insbesondere im Bereich der Abgabe des Reaktionsmittels in den Abgasstrom A führende Wirkung entfalten. Das Reaktionsmittel wird somit durch den Mantelstrom M in definierter Weise vom Ort der Abgabe weggeführt, so dass auch eine Rezirkulation von Reaktionsmittel bzw. Reaktionsmitteltröpfchen in den Bereich des Stutzens 22 weitestgehend vermieden wird und der Reaktionsmittelstrom R in definierter Art und Weise in den Abgasstrom A eingeleitet wird. Durch diese Abschirmung einerseits und Führung des Reaktionsmittelstroms R andererseits wird es möglich, größere Mengen des Reaktionsmittels in den Abgasstrom A einzuleiten, wodurch eine effizientere Ausnutzung der unter Hinzufügung des Reaktionsmittels durchzuführenden Reaktion erreicht werden kann.

Bei dem in den Fig. 1 und 2 dargestellten Beispiel einer Abgasanlage 10 wird zur Erzeugung des Mantelstroms R aus dem Abgasstrom A abgezweigtes Abgas genutzt. Dazu kann vorzugsweise stromaufwärts des Ortes, an welchem durch die Reaktionsmittelabgabeanordnung 18 der Reaktionsmittelstrom R und der Mantelstrom M generiert werden, ein Teil des Abgases über eine Abgasabzweigleitung 32 vom Abgaskanal 12 abgezweigt und in Richtung zur Mantelstromabgabeeinheit 26, insbesondere zur Mantelstromabgabekammer 28 geleitet werden. Um in dem Bereich der Abgasabzweigung definierte Druckverhältnisse einstellen zu können und dadurch die über die Abgasabzweigungsleitung 32 strömende Abgasmenge einstellen zu können, erfolgt die Abzweigung des zur Bereitstellung des Mantelstroms M als Mantelstromgas genutzten Abgases vorzugsweise stromaufwärts einer im Abgaskanal 12 angeordneten und vorteilhafterweise hinsichtlich ihres Drosselverhaltens einstellbaren Abgasdrosselanordnung 34. Alternativ oder zusätzlich kann in Zuordnung zum Abgasabzweigkanal 32 eine in der Fig. 1 nicht dargestellte Abgasmengeneinstellventilanordnung vorgesehen sein, welche, beispielsweise auch abhängig vom Betriebspunkt einer Brennkraftmaschine, die für die einzuspritzende Menge des Reaktionsmittels geeignete Menge bzw. den geeigneten Druck des Mantelstromgases zur Erzeugung des Mantelstroms M bereitstellen kann.

Durch das Verwenden eines Teils des in den Abgaskanal 12 eingeleiteten Abgases zur Erzeugung des Mantelstroms M wird die Möglichkeit bereitgestellt, eine vergleichsweise große Mantelstromgasmenge zur Erzeugung eines entsprechend intensiven Mantelstroms M zu nutzen. Gleichzeitig weist das als Mantelstromgas abgezweigte Abgas eine vergleichsweise hohe Temperatur auf, was die Verdunstung des beispielsweise als Harnstoff/Wasser-Gemisch bereitgestellten Reaktionsmittels bei Einleitung in den Abgaskanal 12 unterstützt. Dabei kann beim Durchströmen der Abgasabzweigleitung 32 die Temperatur des darin strömenden Abgases gegenüber der Temperatur des im Abgaskanal 12 weiterströmenden Abgases etwas abfallen, so dass durch die vermittels des Mantelstroms M auch erzeugte Abschirmung die Reaktionsmittelabgabeeinheit 24, insbesondere des zum Abgaskanal 12 hin frei liegende Spitzenbereich derselben, gegenüber dem noch heißeren Abgasstrom A thermisch etwas abgeschirmt wird.

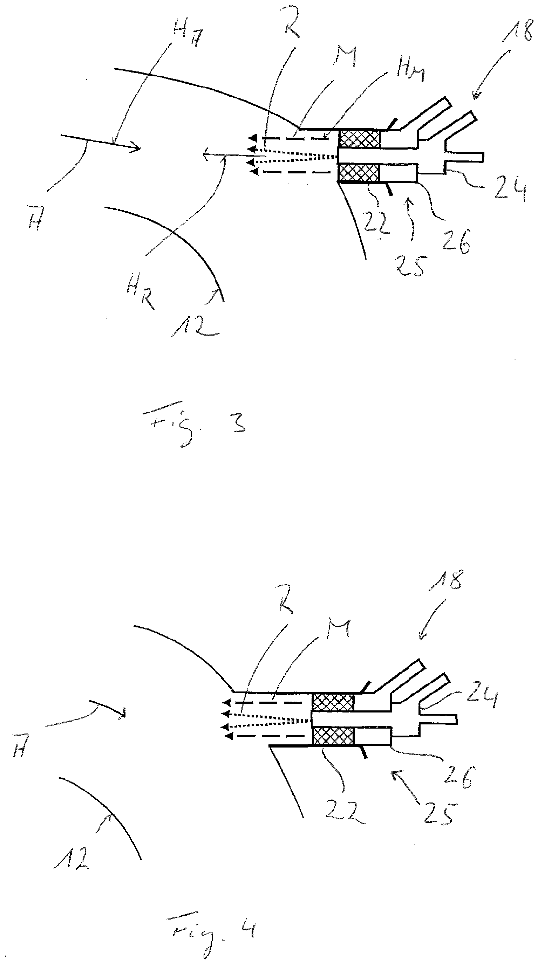

Mit Bezug auf die Fig. 3 bis 6 werden nachfolgend verschiedene Konfigurationen beschrieben, in welchen die Reaktionsmittelabgabeeinheit 18 bezüglich des Abgaskanals 12 bzw. des Abgasstroms A positioniert werden kann. Die Fig. 3 zeigt eine Ausgestaltung, bei welcher die Reaktionsmittelabgabeanordnung 18 so positioniert ist, dass das durch die Reaktionsmittelabgabeeinheit 24 abgegebene Reaktionsmittel bzw. der Reaktionsmittelstrom R mit einer Hauptströmungsrichtung H_{R} in den Abgaskanal 12 eintritt, welche der Abgasstrom-Hauptströmungsrichtung H_{A} in diesem Bereich im Wesentlichen entgegengerichtet ist. Auch der Mantelstrom M wird durch die Mantelstromabgabeeinheit 26 in einer Richtung abgegeben, welche im Wesentlichen der Reaktionsmittelstrom-Hauptströmungsrichtung H_{R} entspricht und somit gleichermaßen im Wesentlichen entgegengesetzt ist zur Abgasstrom-Hauptströmungsrichtung H_{A}.

Durch dieses der Abgasstrom-Hauptströmungsrichtung H_{A} im Wesentlichen entgegengesetzte Einleiten des Reaktionsmittels in den Abgaskanal 12 und somit auch in den Abgasstrom A wird aufgrund der somit auch generierten Turbulenzen eine besonders effiziente Durchmischung des Reaktionsmittels mit dem Abgas erreicht. Gleichzeitig sorgt jedoch der insbesondere in dem Bereich nahe dem Stutzen 22 den Reaktionsmittelstrom R umhüllende Mantelstrom M dafür, dass ein Kontakt des Reaktionsmittels bzw. von Reaktionsmitteltröpfchen mit der Innenoberfläche des Abgaskanals 12 bzw. des Stutzens 22 weitestgehend vermieden wird bzw. dass auch eine Reaktionsmittelrezirkulation in den Bereich des Stutzens 22 bzw. der Abgabe des Reaktionsmittels aus der Reaktionsmittelabgabeeinheit 24 weitestgehend vermieden wird.

Die Fig. 4 zeigt eine Konfiguration, bei welcher der Reaktionsmittelstrom R und auch der Mantelstrom M auch im Wesentlichen dem Abgasstrom A entgegengerichtet in den Abgaskanal 12 eingeleitet werden. Bei dieser Variante ist beispielsweise durch eine etwas längere Ausgestaltung des Stutzens 22 die Möglichkeit geschaffen, die Reaktionsmittelabgabeeinheit 18 etwas weiter in den Stutzen 22 zurückgezogen anzuordnen, so dass der Ort, an welchem das Reaktionsmittel die Reaktionsmittelabgabeeinheit 24 verlässt, etwas Abstand zum Abgaskanal 12 und somit auch zum Abgasstrom A hat. Der Mantelstrom M umhüllt den Reaktionsmittelstrom R insbesondere auch im Bereich des Stutzens 22 und sorgt somit dafür, dass ein Kontakt der Reaktionsmittels R mit der Innenoberfläche des Stutzens 22 und auch eine Rezirkulation von Reaktionsmittel in den Bereich des Stutzens 22 weitestgehend unterbleibt.

Es ist darauf hinzuweisen, dass durch Einstellen des Mantelstromgasdrucks einerseits und auch durch die Ausgestaltung des Mantelstromabgabekörpers 30 andererseits das Strömungsverhalten des Mantelstroms M und somit auch dessen Auswirkung auf den Reaktionsmittelstrom R beeinflusst werden können. So kann durch eine entsprechend hohe Geschwindigkeit des Mantelstroms M im Vergleich zur Geschwindigkeit des Reaktionsmittelstroms R dessen Führungswirkung für den Reaktionsmittelstrom R sehr ausgeprägt gestaltet werden. Eine vergleichsweise große Menge an Mantelstromgas kann zu einer besonders effizienten Abschirmung des Reaktionsmittelstroms R nach radial außen bezüglich der Reaktionsmittelstrom-Hauptströmungsrichtung H_{R} beitragen.

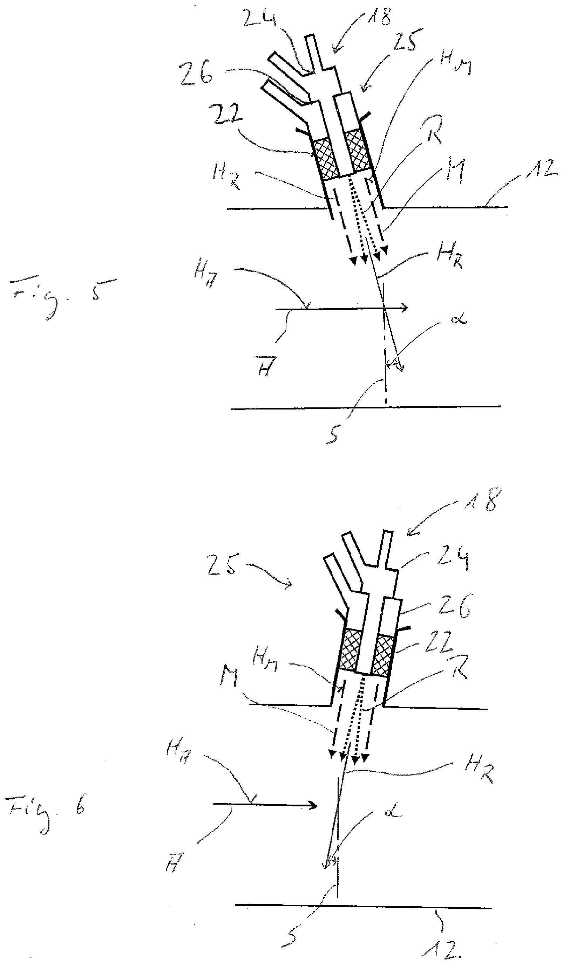

Die Fig. 5 und 6 zeigen Ausgestaltungen, bei welchen die Reaktionsmittelabgabeanordnung 18 im Wesentlichen quer, jedoch unter einem Winkel α angestellt bezüglich des Abgaskanals 18 bzw. einer auf der Abgasstrom-Hauptströmungsrichtung H_{A} im Wesentlichen orthogonal stehenden fiktiven Strömungsorthogonallinie S steht. Diese Strömungsorthogonallinie S kann beispielsweise repräsentiert sein bzw. liegen in einer auf der Abgasstrom-Hauptströmungsrichtung H_{R} orthogonal stehenden Strömungsquerschnittsfläche im Abgaskanal 12.

Die Fig. 5 zeigt eine Ausgestaltung, bei welcher die Reaktionsmittelabgabeanordnung 18 so angestellt ist, dass sich ein positiver Winkel α zwischen der Reaktionsmittelstrom-Hauptströmungsrichtung H_{R} und der Strömungsorthogonallinie S, also der Strömungsquerschnittsfläche im Abgaskanal 12, ergibt. Positiv im Sinne der vorliegenden Erfindung bedeutet, dass die Abgasstrom-Hauptströmungsrichtung H_{R} bei Vektorzerlegung eine Strömungsrichtungskomponente im Wesentlichen orthogonal zur Abgasstrom-Hauptströmungsrichtung H_{A} und eine Strömungsrichtungskomponente im Wesentlichen parallel und gleichgerichtet zu der Abgasstrom-Hauptströmungsrichtung H_{A} aufweist.

Bei dem in Fig. 6 veranschaulichten Beispiel ist die Reaktionsmittelabgabeanordnung 18 in entgegengesetzter Orientierung angestellt, so dass sich ein negativer Anstellwinkel α zwischen der Reaktionsmittelstrom-Hauptströmungsrichtung H_{R}, damit auch der Mantelstrom-Hauptströmungsrichtung H_{M} einerseits und der auf der in diesem Bereich vorhandenen Abgasstrom-Hauptströmungsrichtung H_{A} orthogonal stehenden Strömungsorthogonallinie S ergibt. Negativ bedeutet im Sinne der vorliegenden Erfindung, dass bei Vektorzerlegung die Reaktionsmittelstrom-Hauptströmungsrichtung H_{R} eine Strömungsrichtungskomponente im Wesentlichen orthogonal zur Abgasstrom-Hauptströmungsrichtung H_{A} und eine Strömungsrichtungskomponente im Wesentlichen parallel zu, jedoch entgegengesetzt gerichtet zu der Abgasstrom-Hauptströmungsrichtung H_{A} aufweist.

Die in den Fig. 5 und 6 dargestellte Anordnung, bei welcher der Reaktionsmittelstrom R und damit auch der Mantelstrom M im Wesentlichen, vorzugsweise jedoch nicht exakt orthogonal zur Abgasstrom-Hauptströmungsrichtung H_{A} eingeleitet werden, kann beispielsweise in besonders vorteilhafter Art dann zum Einsatz gebracht werden, wenn bei Aufbau einer so genannten Kompakt-Mischstrecke die Reaktionsmitteleinleitung in einem im Wesentlichen geradlinig sich erstreckenden Abschnitt des Abgaskanals 12 zwischen einem stromaufwärts positionierten Partikelfilter und einer stromabwärts positionierten Katalysatoranordnung, beispielsweise zur Durchführung einer selektiven katalytischen Reduktion liegt. Dabei sollte vorteilhafterweise der Anstellwinkel α in einem Bereich von +45° bis -45° liegen, wobei besonders vorteilhaft eine Anordnung ist, bei welcher der Winkel α entweder im Bereich von +5° bis +30° oder im Bereich von -5° bis -30° liegt. Dadurch kann einerseits die durch Einleitung des Reaktionsmittels im Wesentlichen quer zur Abgasstrom-Hauptströmungsrichtung H_{A} erreichbare gute Durchmischung genutzt werden, andererseits ist die Gefahr, dass durch den Abgasstrom A ein substantielles Zurückdrängen des Reaktionsmittels in Richtung zur Reaktionsmittelabgabeeinheit 24 erfolgt, sehr gering. In dem der Einleitung des Reaktionsmittels gegenüberliegenden Bereich bzw. Wandungsbereich des Abgaskanals 12 kann zur Unterstützung der Vermischung des Reaktionsmittels mit dem Abgas eine Mischvorrichtung vorgesehen sein oder eine die Verdampfung der Reaktionsmitteltröpfchen unterstützte Hilfsvorrichtung.

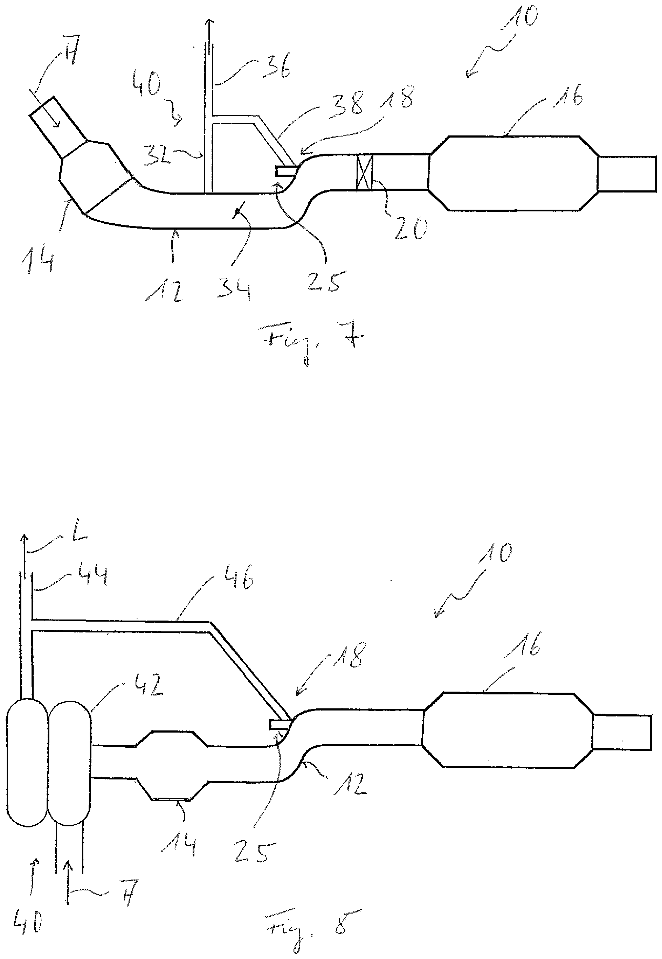

Die Fig. 7 zeigt eine alternative Ausgestaltungsart der Abgasanlage 10, wobei auch bei dieser Ausgestaltungsart Abgas vom Abgasstrom A abgezweigt wird und als Mantelstromgas zur Erzeugung des Mantelstroms in der vorangehend beschriebenen Art und Weise verwendet wird. Bei der in Fig. 7 dargestellten Ausgestaltungsart ist eine auch den Abgasabzweigkanal 32 bereitstellende Abgasrückführleitung 36 vorgesehen. Von dieser Abgas in Richtung zu einer Brennkraftmaschine rückspeisenden Abgasrückführleitung 36 zweigt eine Leitung 38 ab, über welche ein Teil des über den Abgasabzweigkanal 32 aus dem Abgasstrom A abgezweigten Abgases in Richtung zur Reaktionsmittelabgabeanordnung 18 geleitet und dort als Mantelstromgas zur Erzeugung des Mantelstroms genutzt wird. Auch hier ist die Anordnung vorzugsweise derart, dass die Abzweigung eines Teils des Abgases aus dem Abgasstrom A bzw. aus dem Abgaskanal 12 stromaufwärts einer Drosselanordnung 34 erfolgt, um in diesem Bereich die Druckverhältnisse und somit auch die Menge des abgezweigten Abgases einstellen zu können.

Es sei darauf hingewiesen, dass die Abzweigung des Abgases in einem weiter stromaufwärts gelegenen Bereich, also einem Bereich, in welchem allgemein noch ein höherer Druck des Abgases im Abgasstrom vorhanden ist, insbesondere auch einem Bereich stromaufwärts eines Partikelfilters, erfolgen könnte.

Bei den mit Bezug auf die Fig. 1 und 7 beschriebenen Ausgestaltungsvarianten bildet also der Abgasabzweigkanal 32 im Wesentlichen eine Mantelstromgasquelle 40, wobei die Menge des von dieser Mantelstromgasquelle 40 in Richtung zur Reaktionsmittelabgabeanordnung 18 gespeisten Abgases beispielsweise durch entsprechende Auswahl der Strömungsquerschnitte vorgegeben werden kann bzw. durch entsprechende Verstellung der Drosselanordnung 34 oder einer alternativ oder zusätzlich vorgesehenen Abgasmengeneinstellventilanordnung beeinflusst werden kann.

Die Fig. 8 zeigt ein Ausgestaltungsbeispiel, bei welchem Luft als Mantelstromgas genutzt und zur Reaktionsmittelabgabeanordnung 18 gespeist wird. Die in Fig. 8 dargestellte Abgasanlage 10 umfasst in einem stromaufwärtigen Bereich einen Abgasturbolader 42, welcher bei dieser Ausgestaltungsart im Wesentlichen die Mantelstromgasquelle 40 bereitstellt. Der in die Abgasanlage 10 bzw. den Abgasturbolader 42 eintretende Abgasstrom wird dazu genutzt, einen Ladeluftstrom L zu generieren und in Richtung zur Brennkraftmaschine zu speisen. Eine den Ladeluftstrom L vom Abgasturbolader 42 beispielsweise über einen Ladeluftkühler in Richtung zur Brennkraftmaschine führende Ladeluftleitung 44 ist über eine Abzweigleitung 46 in Verbindung mit der Reaktionsmittelabgabeanordnung 18 bzw. der Mantelstromabgabeeinheit 26. Somit kann ein Teil der unter vergleichsweise hohem Druck in Richtung zur Brennkraftmaschine gespeisten Ladeluft als Mantelstromgas genutzt werden, um den Mantelstrom M zu erzeugen. Auch hier können die Druckverhältnisse bzw. die in Richtung zur Mantelstromabgabeeinheit 26 gespeiste Mantelstromgasmenge beispielsweise durch entsprechende Einstellung der Strömungsquerschnitte einerseits, andererseits durch eine beispielsweise im Bereich der Abzweigleitung 46 vorgesehene Einstellventilanordnung beeinflusst werden. Der Aufbau und die Anordnung der Reaktionsmittelabgabeanordnung 18 bzw. der Mantelstromerzeugungsanordnung 25 können dabei so, wie vorangehend mit Bezug auf die Fig. 2 bis 6 beschrieben, sein.

Der Einsatz von Luft als Mantelstromgas bringt verschiedene Vorteile mit sich. Zum einen ist davon auszugehen, dass selbst nach Druckerhöhung im Abgasturbolader 42 die Luft des Ladeluftstroms L eine deutlich niedrigere Temperatur aufweisen wird, als der Abgasstrom A. Daher kann durch die als Mantelstromgas genutzte Luft die Reaktionsmittelabgabeeinheit 24 gekühlt werden bzw. auch durch den vergleichsweise kalten Mantelstrom M gegen den deutlich heißeren Abgasstrom A abgeschirmt werden. Insbesondere wird durch den von der Mantelstromabgabekammer 28 und dem Mantelstromabgabekörper 30 umgebenen Bereich der Reaktionsmittelabgabeeinheit 24 dieser Bereich gekühlt und auch die Erwärmung des vom Abgaskanal 12 weiter entfernt liegenden Bereichs der Reaktionsmittelabgabeeinheit 24 vermieden. Somit kann ohne zusätzliche Kühlmaßnahmen die Funktionsfähigkeit der Reaktionsmittelabgabeeinheit 24 sichergestellt werden. Weiter weist die als Mantelstromgas genutzte Luft einen deutlich geringeren Volumenanteil bzw. Partialdruck von Wasser auf, als der Abgasstrom. Dies unterstützt die Verdunstung des im Reaktionsmittelstrom geführten und von dem Mantelstrom M umgebenen Reaktionsmittels bei Einleitung in den Abgaskanal 12 und führt somit auch zu einer besseren Durchmischung des Reaktionsmittels mit dem Abgas.

Anstelle des Abgasturboladers 42 können auch andere in einem Fahrzeug vorhandene und mit Druckluft arbeitende bzw. Druckluft generierende Systembereiche als Mantelstromgasquelle genutzt werden. So kann beispielsweise eine insbesondere in einem Nutzkraftfahrzeug vorhandene Druckluftbremsanlage genutzt werden, um einen Teil der darin vorhandenen Druckluft abzuzweigen und als Mantelstromgas zur Mantelstromerzeugungsanordnung 25 gespeist werden. Auch ein mechanischer Lader, allgemein als Kompressor bekannt, kann genutzt werden, um einen Teil der dadurch generierten Druckluft abzuzweigen und als Mantelstromgas zu nutzen. Der Vorteil der Verwendung des Abgasturboladers 22 bzw. des Ladeluftstrom L zum Abzweigen von Mantelstromgas ist, dass durch die im Abgasturbolader 12 erzeugte Kompression der Luft diese auch erwärmt wird. Somit ist auch die als Mantelstromgas abgezweigte Luft etwas erwärmt, gleichwohl jedoch deutlich kälter als das im Abgaskanal 12 strömende Abgas. Somit kann einerseits eine Kühlwirkung für die Reaktionsmittelabgabeeinheit 24 bereitgestellt werden, andererseits jedoch durch die etwas erwärmte Luft eine bessere Verdunstung des in flüssiger Form eingespeisten Reaktionsmittels erreicht werden.

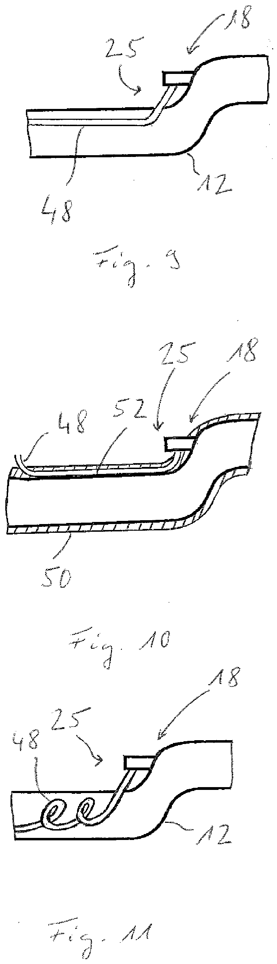

Dieser Effekt der Erwärmung bzw. Vorerwärmung der als Mantelstromgas genutzten Luft kann auch in anderer Weise erzielt werden. So zeigt beispielsweise die Fig. 9 einen Ausschnitt des Abgaskanals 12, in welchem eine Leitung 48 zur Mantelstromerzeugungsanordnung 25 geführt ist. Diese Leitung 48 kann beispielsweise der Abzweigleitung 46 in Fig. 8 entsprechen, kann jedoch auch eine Luft als Mantelstromgas von einer anderen Mantelstromgasquelle zur Mantelstromerzeugungsanordnung 25 führende Leitung sein, beispielsweise auch eine von einer Druckluftpumpe herführende Leitung 48. Die Leitung 48 ist bereichsweise im Inneren des Abgaskanals 12 geführt, so dass dort durch das Umströmen der Abzweigleitung 48 mit Abgas eine thermische Wechselwirkung zwischen dem Abgas des Abgasstroms einerseits und der in der Abzweigleitung 48 strömenden Luft andererseits zur Erwärmung dieser Luft genutzt werden kann. Somit wird die in die Mantelstromerzeugungsanordnung 25 eingespeiste Luft wärmer sein als die Umgebungsluft, jedoch eine niedrigere Temperatur aufweisen, als das im Abgaskanal 12 strömende Abgas.

Eine Abwandlung dieses Funktionsprinzips ist in Fig. 10 gezeigt. Man erkennt hier, dass der Abgaskanal 12 zumindest bereichsweise von einem Isolationsmaterial 50 umgeben ist. An der Außenseite 52 des Abgaskanals 12 ist die Leitung 48 entlanggeführt, um die thermische Wechselwirkung zwischen dem Abgas und der Luft zu erlangen. Gleichwohl ist die Leitung 48 auch von dem Isoliermaterial 50 umgeben, um Wärmeverluste in diesem Bereich zu vermeiden.

Bei der in Fig. 11 dargestellten Ausgestaltungsvariante erstreckt sich die Leitung 48 im Inneren des Abgaskanals 12. Ähnlich wie bei der Ausgestaltungsform der Fig. 9 ist beispielsweise dort, wo die Mantelstromerzeugungsanordnung 25 am Abgaskanal 12 vorgesehen ist, die Leitung 48 aus dem Abgaskanal 12 herausgeführt. Bei der in Fig. 11 dargestellten Ausgestaltungsvariante ist zur verbesserten thermischen Wechselwirkung, insbesondere zur Erhöhung der Wechselwirkungsstrecke, die Leitung 48 beispielsweise schraubenartig gewunden ausgebildet.

Es ist darauf hinzuweisen, dass selbstverständlich verschiedene der vorangehend beschriebenen Ausgestaltungsaspekte auch kombiniert werden können. So kann beispielsweise bei entsprechendem Bedarf an Mantelstromgas auf eine Kombination von Abgas einerseits und Luft andererseits zur Bereitstellung des Mantelstromgases zurückgegriffen werden. Beispielsweise könnte ein Teil des Abgases in der in den Fig. 1 oder 7 gezeigten Form vom Abgasstrom A abgezweigt werden, während ein Teil der den Abgasturbolader 42 verlassenden Ladeluft L abgezweigt wird, und ebenfalls zur Mantelstromerzeugungsanordnung 25 gespeist wird. Beispielsweise können die beiden Gasströme zusammen oder getrennt voneinander in die Mantelstromabgabekammer 28 eingespeist und dort vermischt werden.

## Patentansprüche

1. Abgasanlage für eine Brennkraftmaschine, insbesondere Fahrzeugbrennkraftmaschine, umfassend einen einen Abgasstrom (A) führenden Abgaskanal (12) und eine Reaktionsmittelabgabeanordnung (18) zur Abgabe eines Reaktionsmittelstroms (R) in den Abgasstrom (A), wobei die Reaktionsmittelabgabeanordnung (18) eine Reaktionsmittelabgabeeinheit (24) umfasst, ferner umfassend eine Mantelstromerzeugungsanordnung (25) zur Erzeugung eines den aus der Reaktionsmittelabgabeanordnung (18) abgegebenen Reaktionsmittelstrom (R) umgebenden Mantelstroms (M), wobei die Mantelstromerzeugungsanordnung (25) eine die Reaktionsmittelabgabeeinheit (24) ringartig umgebende Mantelstromabgabeeinheit (26) umfasst, wobei die Mantelstromabgabeeinheit (26) einen Mantelstromabgabekörper (30) und stromaufwärts des Mantelstromabgabekörpers (30) eine zu dem Mantelstromabgabekörper (30) führende Mantelstromabgabekammer (28) umfasst, **dadurch gekennzeichnet, dass** der Mantelstromabgabekörper (30) mit poröser Struktur ausgebildet ist.

2. Abgasanlage nach Anspruch 1, **dadurch gekennzeichnet, dass** der Mantelstrom (M) den Reaktionsmittelstrom (R) bezüglich einer Reaktionsmittel-Hauptströmungsrichtung (H_{R}) im Wesentlichen vollständig umgibt, oder/und dass eine Mantelstrom-Hauptströmungsrichtung (H_{M}) im Wesentlichen einer Reaktionsmittelstrom-Hauptströmungsrichtung (H_{R}) entspricht.

3. Abgasanlage nach Anspruch 1 oder 2, **dadurch gekennzeichnet, dass** der Mantelstromabgabekörper (30) ringartig ausgebildet ist, und dass die Mantelstromabgabekammer (28) ringartig ausgebildet ist.

4. Abgasanlage nach einem der Ansprüche 1-3, **dadurch gekennzeichnet, dass** der Mantelstromabgabekörper (30) als Sinterkörper, ausgebildet ist.

5. Abgasanlage nach einem der Ansprüche 1-4, **dadurch gekennzeichnet, dass** eine Mantelstromgasquelle (40) zum Zuführen von Mantelstromgas zu einer Mantelstromabgabeeinheit (26) vorgesehen ist.

6. Abgasanlage nach Anspruch 5, **dadurch gekennzeichnet, dass** der Mantelstrom (M) im Wesentlichen ein Luftstrom ist, und dass die Mantelstromgasquelle (40) eine Druckluftquelle umfasst.

7. Abgasanlage nach Anspruch 6, **dadurch gekennzeichnet, dass** die Druckluftquelle umfasst:
- einen Abgasturbolader (42) oder einen mechanischen Lader,
oder/und
- eine Druckluftbremsanlage,
oder/und
- eine Druckluftpumpe.

8. Abgasanlage nach Anspruch 5, **dadurch gekennzeichnet, dass** der Mantelstrom (M) im Wesentlichen ein Abgasteilstrom ist, und dass die Mantelstromgasquelle (40) eine Abgasquelle umfasst.

9. Abgasanlage nach Anspruch 8, **dadurch gekennzeichnet, dass** die Abgasquelle einen von dem Abgaskanal (12) abzweigenden Abgasabzweigungskanal (32) umfasst.

10. Abgasanlage nach Anspruch 9, **dadurch gekennzeichnet, dass** der Abgasabzweigungskanal (32) von dem Abgaskanal (12) stromaufwärts einer Abgasdrosselungsanordnung (34) abzweigt, oder/und dass dem Abgasabzweigkanal (32) eine Abgasmengeneinstellventilanordnung zugeordnet ist, oder/und dass der Abgasabzweigkanal (32) eine Abgasrückführleitung (36) umfasst.

11. Abgasanlage nach einem der Ansprüche 1-10, **dadurch gekennzeichnet, dass** eine Mantelstrom-Hauptströmungsrichtung (H_{M}) oder/und eine Reaktionsmittelstrom-Hauptströmungsrichtung (H_{R}) des aus der Reaktionsmittelabgabeanordnung (18) abgegebenen Reaktionsmittelstroms (R) im Wesentlichen einer Abgasstrom-Hauptströmungsrichtung (H_{A}) des Abgasstroms (A) im Abgaskanal (12) im Bereich der Abgabe des Reaktionsmittelstroms (R) entspricht.

12. Abgasanlage nach einem der Ansprüche 1-10, **dadurch gekennzeichnet, dass** eine Mantelstrom-Hauptströmungsrichtung (H_{M}) oder/und eine Reaktionsmittelstrom-Hauptströmungsrichtung (H_{R}) des aus der Reaktionsmittelabgabeanordnung (25) abgegebenen Reaktionsmittelstroms (R) im Wesentlichen einer Abgasstrom-Hauptströmungsrichtung (H_{A}) des Abgasstroms (A) im Abgaskanal (12) im Bereich der Abgabe des Reaktionsmittelstroms (R) entgegengerichtet ist.

13. Abgasanlage nach einem der Ansprüche 1-10, **dadurch gekennzeichnet, dass** eine Mantelstrom-Hauptströmungsrichtung (H_{M}) oder/und eine Reaktionsmittelstrom-Hauptströmungsrichtung (H_{R}) des aus der Reaktionsmittelabgabeanordnung (18) abgegebenen Reaktionsmittelstroms (R) bezüglich einer zu einer Abgasstrom-Hauptströmungsrichtung (H_{A}) des Abgasstroms (A) im Abgaskanal (12) im Bereich der Abgabe des Reaktionsmittelstroms (R) im Wesentlichen orthogonalen Strömungsorthogonallinie (S) unter einem Anstellwinkel (α) im Bereich von +45° bis -45°, vorzugsweise im Bereich von +30° bis +5° oder im Bereich von - 30° bis -5°, angestellt ist, wobei bei einem positiven Anstellwinkel (a) die Mantelstrom-Hauptströmungsrichtung (H_{M}) oder/und die Reaktionsmittelstrom-Hauptströmungsrichtung (H_{R}) eine Strömungsrichtungskomponente in Richtung der Abgasstrom-Hauptströmungsrichtung (H_{A}) aufweist und bei einem negativen Anstellwinkel (α) die Mantelstrom-Hauptströmungsrichtung (H_{M}) oder/und die Reaktionsmittelstrom-Hauptströmungsrichtung (H_{R}) eine Strömungsrichtungskomponente entgegen der Abgasstrom-Hauptströmungsrichtung (H_{A}) aufweist.

## Claims

1. Exhaust system for an internal combustion engine, especially an internal combustion engine of a vehicle, comprising an exhaust gas duct (12) carrying an exhaust gas stream (A) and a reactant release arrangement (18) for releasing a reactant stream (R) into the exhaust gas stream (A), wherein the reactant release arrangement (18) comprises a reactant release unit (24) further comprising a bypass flow generation arrangement (25) for generating a bypass flow (M) surrounding the reactant stream (R) released from the reactant release arrangement (18), wherein said bypass flow generation arrangement (25) comprises a bypass flow release unit (26) surrounding the reactant release unit (24) in a ring-shaped manner, wherein said bypass flow release unit (26) comprises a bypass flow release body (30) and, upstream of the bypass flow release body (30), a bypass flow release chamber (28) leading to the bypass flow release body (30), **characterized in that** the bypass flow release body (30) has a porous configuration.

2. Exhaust system in accordance with claim 1, **characterized in that** the bypass flow (M) surrounds the reactant stream (R) essentially completely in relation to a main direction of flow of the reactant, (H_{R}), or/and that a main direction of flow of the bypass flow, (H_{M}), essentially corresponds to a main direction of flow of the reactant stream (H_{R}).

3. Exhaust system in accordance with claim 1 or 2, **characterized in that** the bypass flow release body (30) is ring-shaped and that the bypass flow release chamber (28) is ring-shaped.

4. Exhaust system in accordance with one of claims 1-3, **characterized in that** the bypass flow release body (30) is adapted in the form of a sintered body.

5. Exhaust system in accordance with one of the claims 1-4, **characterized in that** a bypass flow gas source (40) is provided for feeding bypass flow gas to a bypass flow release unit (26).

6. Exhaust system in accordance with claim 5, **characterized in that** the bypass flow (M) is essentially an air stream and that the bypass flow gas source (40) comprises a compressed air source.

7. Exhaust system in accordance with claim 6, **characterized in that** the compressed air source comprises:
- an exhaust gas turbocharger (42) or a mechanical charger,
or/and
- a compressed air brake system,
or/and
- a compressed air pump.

8. Exhaust system in accordance with claim 5, **characterized in that** the bypass flow (M) is essentially a partial exhaust gas stream and that the bypass flow gas source (40) comprises an exhaust gas source.

9. Exhaust system in accordance with claim 8, **characterized in that** the exhaust gas source comprises an exhaust gas branch duct (32) branching off from the exhaust gas duct (12).

10. Exhaust system in accordance with claim 9, **characterized in that** the exhaust gas branch duct (32) branches off from the exhaust gas duct (12) upstream of an exhaust gas throttle arrangement (34), or/and that an exhaust gas quantity-setting valve arrangement is associated with the exhaust gas branch duct (32), or/and that the exhaust gas branch duct (32) comprises an exhaust gas return line (36).

11. Exhaust system in accordance with one of the claims 1-10, **characterized in that** a main direction of flow of the bypass flow, (H_{M}), or/and a main direction of flow of the reactant stream, (H_{R}), of the reactant stream (R) released from the reactant release arrangement (18) corresponds essentially to a main direction of flow of the exhaust gas stream, (H_{A}), of the exhaust gas stream (A) in the exhaust gas duct (12) in the area in which the reactant stream (R) is released.

12. Exhaust system in accordance with one of the claims 1-10, **characterized in that** a main direction of flow of the bypass flow, (H_{M}), or/and a main direction of flow of the reactant stream, (H_{R}), of the reactant stream (R) released from the reactant release arrangement (25) is directed essentially opposite a main direction of flow of the exhaust stream (A) in the exhaust duct (12) in the area in which the reactant stream (R) is released.

13. Exhaust system in accordance with one of the claims 1-10, **characterized in that** a main direction of flow of the bypass flow, (H_{M}), or/and a main direction of flow of the reactant stream, (H_{R}), of the reactant stream (R) released from the reactant release arrangement (18) is in relation to a flow orthogonal line (S) substantially orthogonal to a main direction of flow of the exhaust gas stream, (H_{A}), of the exhaust gas stream (A) in the exhaust gas duct (12) in the area in which the reactant stream (R) is released set at a pitch angle (α) in the range of +45° to -45°, preferably in the range of +30° to +5° or in the range of -30° to -5°, wherein the main direction of flow of the bypass flow, (H_{M}), or/and the main direction of flow of the reactant stream, (H_{R}), has a flow direction component in the direction of the main direction of flow of the exhaust gas stream, (H_{A}), in case of a positive pitch angle (α), and the main direction of flow of the bypass flow, (H_{M}), or/and the main direction of flow of the reactant stream, (H_{R}), has a flow direction component opposite the main direction of flow of the exhaust gas stream, (H_{A}) in case of a negative pitch angle (α).

## Revendications

1. Système de gaz d'échappement pour un moteur à combustion interne, en particulier pour un moteur à combustion interne d'un véhicule, comprenant un canal de gaz d'échappement (12) transportant un flux de gaz d'échappement (A), et un arrangement de libération de réactif (18) pour libérer un flux de réactif (R) dans le flux de gaz d'échappement (A), où l'arrangement de libération de réactif (18) comprend une unité de libération de réactif (24) comprenant en outre un arrangement de génération de flux enveloppant (25) pour générer un flux enveloppant (M) entourant le flux de réactif (R) libéré par l'arrangement de libération de réactif (18), l'arrangement de génération de flux enveloppant (25) comprenant une unité de libération de flux enveloppant (26) entourant de manière annulaire l'unité de libération de réactif (24), l'unité de libération de flux enveloppant (26) comprenant un corps de libération de flux enveloppant (30) et en amont du corps de libération de flux enveloppant (30) une chambre de libération de flux enveloppant (28) menant au corps de libération de flux enveloppant (30), **caractérise en ce que** le corps de libération de flux enveloppant (30) est adapté avec une structure poreuse.

2. Système de gaz d'échappement selon la revendication 1, **caractérisé en ce que** le flux enveloppant (M) entoure essentiellement entièrement le flux de réactif (R) concernant un sens principal d'écoulement de réactif (H_{R}), ou/et **en ce qu'**un sens principal d'écoulement de flux enveloppant (H_{M}) correspond essentiellement à un sens principal d'écoulement de réactif (H_{R}).

3. Système de gaz d'échappement selon les revendications 1 ou 2, **caractérisé en ce que** le corps de libération de flux enveloppant (30) est adapté de manière annulaire et **en ce que** la chambre de libération de flux enveloppant (28) est adaptée de manière annulaire.

4. Système de gaz d'échappement selon une des revendications 1-3, **caractérisé en ce que** le corps de libération de flux enveloppant (30) est adapté sous forme d'un corps fritté.

5. Système de gaz d'échappement selon une des revendications 1-4, **caractérisé en ce qu'**une source de gaz de flux enveloppant (40) est prévue pour fournir du gaz de flux enveloppant à une unité de libération de flux enveloppant (26).

6. Système de gaz d'échappement selon la revendication 5, **caractérisé en ce que** le flux enveloppant (M) est essentiellement un flux d'air et **en ce que** la source de gaz de flux enveloppant (40) comprend une source d'air comprimée.

7. Système de gaz d'échappement selon la revendication 6, **caractérisé en ce que** la source d'air comprimée comprend:
- un turbocompresseur de gaz d'échappement (42) ou un compresseur mécanique, ou/et
- un système de frein à air comprimée,
ou/et
- une pompe à air comprimée.

8. Système de gaz d'échappement selon la revendication 5, **caractérisé en ce que** le flux enveloppant (M) est essentiellement un flux partiel de gaz d'échappement et **en ce que** la source de gaz de flux enveloppant (40) comprend une source de gaz d'échappement.

9. Système de gaz d'échappement selon la revendication 8, **caractérisé en ce que** la source de gaz d'échappement comprend un canal ramifié de gaz d'échappement (32) partant du canal de gaz d'échappement (12).

10. Système de gaz d'échappement selon la revendication 9, **caractérisé en ce que** le canal ramifié de gaz d'échappement (32) part du canal de gaz d'échappement (12) en amont d'un arrangement de réduction du gaz d'échappement (34), ou/et **en ce qu'**un arrangement de soupape de règlement de volume de gaz d'échappement est associé au canal ramifié de gaz d'échappement (32) ou/et **en ce que** le canal ramifié de gaz d'échappement (32) comprend une conduite de retour de gaz d'échappement (36).

11. Système de gaz d'échappement selon une des revendications 1-10, **caractérisé en ce qu'**un sens principal d'écoulement de flux enveloppant (H_{M}) ou/et un sens principal d'écoulement de réactif (H_{R}) du flux de réactif (R) libéré par l'arrangement de libération de réactif (18) est essentiellement opposé à un sens principal d'écoulement de flux de gaz d'échappement (H_{A}) du flux de gaz d'échappement (A) dans le canal de gaz d'échappement (12) dans la région de la libération du flux de réactif (R).

12. Système de gaz d'échappement selon une des revendications 1-10, **caractérisé en ce qu'**un sens principal d'écoulement de flux enveloppant (H_{M}) ou/et un sens principal d'écoulement de réactif (H_{R}) du flux de réactif (R) libéré par l'arrangement de libération de réactif (25) correspond essentiellement à un sens principal d'écoulement de flux de gaz d'échappement (H_{A}) du flux de gaz d'échappement (A) dans le canal de gaz d'échappement (12) dans la région de la libération du flux de réactif (R).

13. Système de gaz d'échappement selon une des revendications 1-10, **caractérisé en ce qu'**un sens principal d'écoulement de flux enveloppant (H_{M}) ou/et un sens principal d'écoulement de réactif (H_{R}) du flux de réactif (R) libéré par l'arrangement de libération de réactif (18) par rapport à une ligne orthogonal d'écoulement (S) essentiellement orthogonale à un sens principal d'écoulement de flux de gaz d'échappement (H_{A}) du flux de gaz d'échappement (A) dans le canal de gaz d'échappement (12) dans la région de la libération du flux de réactif (R) est incliné par un angle d'attaque (α) compris entre +45° et -45°, de préférence compris entre +30° et +5° ou compris entre -30° et -5°, où dans le cas d'un angle d'attaque (α) positif le sens principal d'écoulement de flux enveloppant (H_{M}) ou/et le sens principal d'écoulement de réactif (H_{R}) comprend un composant de sens d'écoulement dans le sens principal d'écoulement de flux de gaz d'échappement (H_{A}) et où dans les cas d'un angle d'attaque (α) négatif le sens principal d'écoulement de flux enveloppant (H_{M}) ou/et le sens principal d'écoulement de réactif (H_{R}) comprend un composant de sens d'écoulement opposé au sens principal d'écoulement de flux de gaz d'échappement (H_{A}).
